Europäisches Patentamt

European Patent Office

Office européen des brevets

(11) Veröffentlichungsnummer: **0 223 030**
**B1**

(12) # EUROPÄISCHE PATENTSCHRIFT

(45) Veröffentlichungstag der Patentschrifft:
21.03.90

(51) Int. Cl. ⁵: **B 27 F   1/12,** B 23 Q   9/00

(21) Anmeldenummer: **86113644.8**

(22) Anmeldetag: **02.10.86**

(54) **Oberfräsenführer für eine gitterartige Zinkenfräslehre.**

(30) Priorität: **25.10.85 DE 3537992**

(43) Veröffentlichungstag der Anmeldung:
**27.05.87 Patentblatt 87/22**

(45) Bekanntmachung des Hinweises auf die Patenterteilung:
**21.03.90 Patentblatt 90/12**

(84) Bennante Vertragsstaaten:
**AT BE CH DE ES FR GB IT LI NL SE**

(56) Entgegenhaltungen:
**EP-A-0 126 285
CH-A-590 117
FR-A-2 350 936
GB-A-818 518
US-A-1 462 962
US-A-2 662 562
US-A-2 970 618
US-A-3 346 026
US-A-4 197 887**

**Verkaufsprospekt der Metabowerke GmbH & Co für
die Oberfräse "Expert 4380"**

(73) Patentinhaber: **Werkzeug-Gesellschaft mit beschränkter
Haftung
Löhstrasse 15
D-5441 Weibern (DE)**

(72) Erfinder: **Wolff, Robert
Im Kiesacker 12
D-5446 Engeln (DE)**

(74) Vertreter: **Peerbooms, Rudolf, Dipl.-Phys.
Postfach 200 208 Dickmannstrasse 45C
D-5600 Wuppertal 2 (DE)**

2

## Beschreibung

Die Erfindung betrifft einen Oberfräsenführer, wobei die Oberfräse eine mit einem zentralen Durchbruch für das Fräserwerkzeug versehene Grundplatte aufweist, die in Fräserachsrichtung verstellbar ist und Befestigungseinrichtungen für eine Führungsplatte aufweist.

Eine typische Oberfräse ist durch den Katalog Metabowerke GmbH & Co., Nürtingen, Ausgabe 1983, Seite 54 bekannt. Diese weist einen hochtourigen Antriebsmotor sowie eine Grundplatte auf, welche über Standbeine oder dgl. am Motor befestigt ist und gegenüber diesem in Fräserachsrichtung verstellbar ist. Die Grundplatte ist dabei mit Befestigungseinrichtungen, z. B. Gewindebohrungen, für eine Führungsplatte versehen, die auf das zu fräsende Werkstück aufgesetzt wird. Zum Fräsen geradliniger Nuten oder dgl. sind im allgemeinen an der Führungsplatte Führungsanschläge oder dgl. ansetzbar.

Durch die DE-PS-2 642 924 ist weiterhin eine gitterartige Zinkenfräslehre bekannt, welche eine Tischauflageplatte und eine rechtwinklig dazu angeordnete Rückenplatte aufweist. Beide Platten sind mit einer Reihe von parallelen Längsschlitzen versehen, welche im Eckbereich der beiden Platten fluchtend ineinander übergehen. Mit Hilfe der bekannten Zinkenfräslehre können kammartige Keileckverbindungen, insbesondere Schwalbenschwanz-Keilverbindungen hergestellt werden, wobei als Antriebseinrichtung für das Fräswerkzeug dort eine Handbohrmaschine vorgesehen ist, an deren Hals ein Führungsstück anklemmbar ist. Beim Fräsen der Nuten einer Keilverbindung wird dann das Führungsstück exakt in den Schlitzen der Zinkenfräslehre geführt. Da das Führungsstück nur an Handbohrmaschinen anbringbar ist, konnte die Zinkenfräslehre bisher nicht im Zusammenhang mit Oberfräsen eingesetzt werden, so daß Keileckverbindungen mit diesen Geräten allenfalls nach sehr langwierigen Präzisionsmessungen und mit einer sehr genauen Einstellung von Führungsanschlägen herstellbar waren.

Der Erfindung liegt die Aufgabe zugrunde, einen Oberfräsenführer zu schaffen, welcher im Zusammenwirken mit einer gitterartigen Zinkenfräslehre zur bequemen und schnellen Herstellung von Keileckverbindungen einsetzbar ist.

Diese Aufgabe ist erfindungsgemäß dadurch gelöst, daß der Oberfräsenführer für einen Einsatz bei einer gitterartigen Zinkenfräslehre ausgebildet ist, wozu die auf die Zinkenfräslehre aufzulegende Führungsplatte an ihrer Unterseite einen vorstehenden, vom Fräswerkzeug durchsetzten, stegartigen Führungsschuh aufweist, welcher radial zur Durchlaßöffnung für das Fräswerkzeug gerichtet ist und in die Gitterschlitze der Zinkenfräslehre einschiebbar ist, daß sich der Führungsschuh bis etwa zum Rand der Führungsplatte erstreckt und daß auf dem Führungsschuh ein arretierbarer Fräshub-Begrenzungsanschlag verschiebbar gelagert ist. Vorteilhafterweise können die Führungsplatte und der Führungsschuh dem Benutzer als Einheit geliefert werden, welche in einfacher Weise gegen die normale Führungsplatte einer Oberfräse austauschbar ist. Dabei kann ohne weiteres auf die ohnehin vorhandenen Befestigungseinrichtungen an der Grundplatte zurückgegriffen werden; d. h. aufwendige Fixierelemente für den Führungsschuh sind nicht erforderlich. Der Oberfräsenführer ist in seiner Handhabung besonders bequem, weil das Fräswerkzeug nicht nur durch den Führungsschuh, sondern auch durch die auf der Zinkenfräslehre aufliegende Führungsplatte geführt wird. Die Einstellung der Nuttiefe kann über eine axiale Verstellung der Grundplatte erfolgen. Da der Oberfräsenführer in seiner Ausgestaltung dem üblichen Zubehör einer Oberfräse angepaßt ist, wird auch die Einspannung des Fräswerkzeuges im Spannkopf der Oberfräse nicht behindert. Durch den Fräshub-Begrenzungsanschlag, der durch seine Lagerung auf dem Führungsschuh unmittelbar in den Aufbau des Oberfräsenführers integriert ist, kann vor Beginn des Fräsvorganges in einfacher Weise die Länge der zu fräsenden Nuten festgelegt werden.

In Ausgestaltung der Erfindung kann der Führungsschuh zumindest im Bereich der Durchlaßöffnungen einen T-förmigen Querschnitt aufweisen. Somit wird eine Zwangsführung des Fräswerkzeuges im Führungsschlitz bekannter Zinkenfräslehren erreicht, mit welcher eine stets gleichbleibende Nuttiefe sichergestellt ist.

In weiterer Ausgestaltung der Erfindung kann der Führungsschuh nahe des Außenrandes der Führungsplatte eine Gewindebohrung für eine ein Langloch des Begrenzungsanschlages durchsetzende Feststellschraube aufweisen. Der Begrenzungsanschlag kann bei dieser Ausgestaltung stufenlos in verschiedenen Positionen festgesetzt werden.

Gemäß weiterer Ausgestaltung der Erfindung kann das dem Anschlag gegenüberliegende, an die Durchlaßöffnung angrenzende Einführende des Führungsschuhs eine Länge von etwa dem Ein- bis Zweifachen des Durchmessers der Durchlaßöffnung aufweisen und stirnseitig mit Einführschrägen versehen sein, die in die Führungsflächen des Führungsschuhs gleichmäßig übergehen. Der in dieser Weise ausgebildete Führungschuh braucht nur in einer groben Ausrichtung an den jeweiligen Führungsschlitz der Zinkenfräslehre herangeführt werden, da sich durch die Einführschrägen bei weiterem Vorschieben selbsttätig eine Zentrierung des Führungsschuhs und damit des Fräswerkzeugs einstellt.

In weiterer Ausgestaltung der Erfindung kann der Begrenzungsanschlag bis zur Durchlaßöffnung vorschiebbar sein und einen Axialanschlag zur Justierung des Fräswerkzeugs aufweisen. Gemäß der Erfindung kann dabei der Begrenzungsanschlag im Bereich seines Anschlag-Stirnendes mit einer zur Führungsplatte hin offenen Ausnehmung versehen sein, deren Bodenfläche den Axialanschlag bildet. Der Begrenzungsanschlag erhält somit gleichzeitig die Funktion einer

2

axialen Ausrichthilfe für das Fräswerkzeug, wodurch die Vorbereitungsarbeiten zum Fräsen von Keilverbindungen weiter vereinfacht werden.

Der Erfindung zufolge kann der Begrenzungsanschlag an beiden Stirnenden mit unterschiedlich bemessenen Justier-Ausnehmungen versehen sein und um 180° auf dem Führungsschuh umsetzbar sein. Infolgedessen ist der Oberfräsenführer in einfacher Weise an Fräswerkzeuge zur Herstellung unterschiedlicher Nuttiefen anpaßbar.

Gemäß der Erfindung kann die Führungsplatte mit einer Vielzahl von Durchbrüchen für Befestigungsschrauben versehen sein, welche eine Übergröße aufweisen, z. B. als Langlöcher ausgebildet sind, und kann der Führungsplatte ein in die Oberfräse einspannbarer Zentrierstift zugeordnet sein, dessen Zentrierende spielfrei in die Durchlaßöffnung paßt. Mit Hilfe von Durchbrüchen mit Übergröße ist eine Befestigung des Oberfräsenführers an unterschiedlichen Bautypen von Oberfräsen möglich. Durch den Zentrierstift wird trotz der Übergröße der Durchgangslöcher eine genaue Zentrierung der Führungsplatte zur Achse des Fräswerkzeugs erreicht.

In weiterer Ausgestaltung der Erfindung können der Führungsplatte mehrere Führungsschuhe unterschiedlicher Größe zugeordnet sein, die auswechselbar an der Führungsplatte festschraubbar sind. Durch einfache Umstellungsmaßnahmen ist somit eine Anpassung an verschiedene Zinkenfräslehren möglich.

Die Erfindung wird im folgenden anhand der Zeichnung näher erläutert. Es zeigen:

Fig. 1  eine Oberfräse mit einem Oberfräsenführer für eine gitterartige Zinkenfräslehre in einer Explosionsdarstellung,

Fig. 2  die Oberfräse gemäß einem Schnitt II – II in Fig. 1,

Fig. 3  den Oberfräsenführer gemäß einer Blickrichtung III in Fig. 1,

Fig. 4  einen dem Oberfräsenführer zugeordneter Führungsschuh für größere Fräswerkzeuge in einer Blickrichtung wie in Fig. 3,

Fig. 5  einen Fräshub-Begrenzungsanschlag des Oberfräsenführers gemäß einer Blickrichtung V in Fig. 3 in perspektivischer Darstellung,

Fig. 6  einen Führungsschuh des Oberfräsenführers in einer analogen Darstellung zu Fig. 5,

Fig. 7  den Oberfräsenführer gemäß einem Schnitt VII – VII in Fig. 3 mit zugeordnetem Zentrierstift,

Fig. 8  den Oberfräsenführer beim axialen Justieren eines Fräswerkzeugs in einer analogen Darstellung zu Fig. 7 und

Fig. 9  eine dem Oberfräsenführer zugeordnete, gitterartige Zinkenfräslehre.

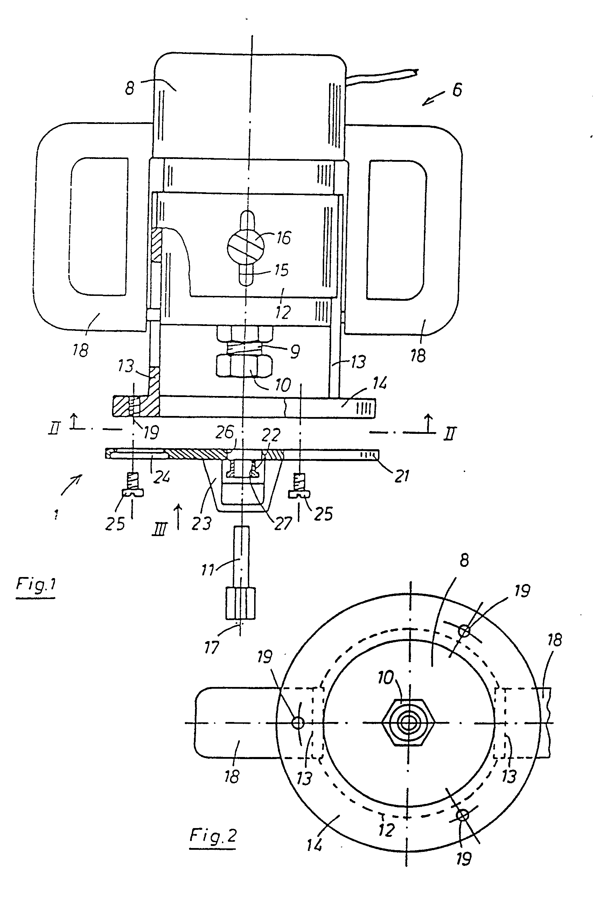

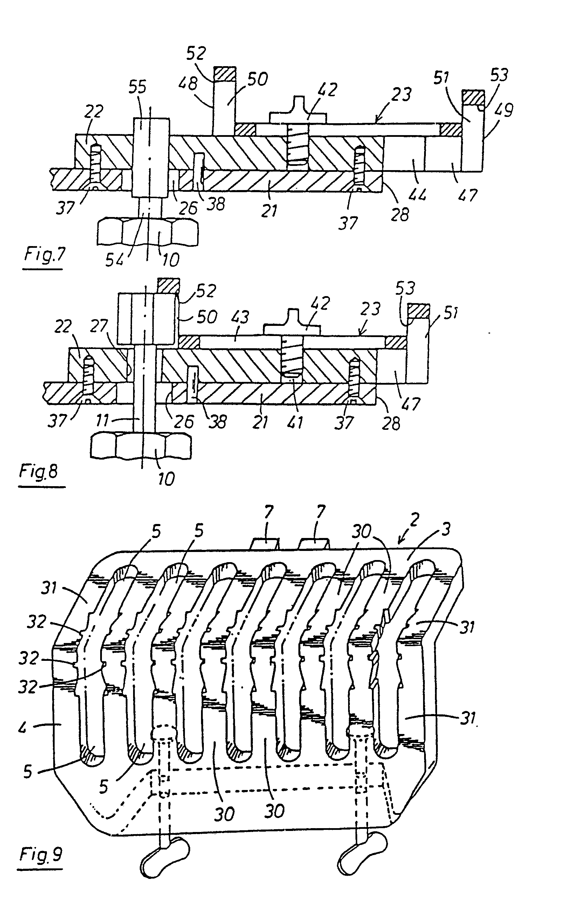

Die Fig. 1 bis 8 erläutern den Aufbau und die Funktion eines Oberfräsenführers 1, welcher einer gitterartigen Zinkenfräslehre 2 gemäß Fig. 9 zugeordnet ist. Die Zinkenfräslehre weist eine Tischauflageplatte 3 und eine Rückenplatte 4 auf, die jeweils mit einer Reihe von parallelen Führungsschlitzen 5 versehen sind. Die Führungsschlitze 5 gehen im Eckbereich der Platten 3, 4 fluchtend ineinander über. Mit Hilfe der Zinkenfräslehre 2 können kammartige Keileckverbindungen gefräst werden, wobei die Schlitze 5 als Führungen für eine Oberfräse 6 dienen. Die verschiedenen erforderlichen Arbeitsschritte entsprechen dabei grundsätzlich der Arbeitsweise mit einer Bohrmaschine. Von daher wird hier auf eine detaillierte Erläuterung verzichtet und statt dessen ausdrücklich auf die Offenbarung der DE-PS-2 642 924 verwiesen. Die Tischauflageplatte 3 der Zinkenfräslehre 2 ist an ihrem freien Rand mit Ausrichtfingern 7 versehen, wie sie in der deutschen Patentanmeldung P 34 40 945.9 vorgeschlagen sind, wodurch die Arbeitsweise weiter vereinfacht ist.

Die in den Fig. 1 und 2 näher dargestellte Oberfräse 6 besteht aus einem Antriebsmotor 8, an dessen Abtriebswelle 9 ein Spannkopf 10 für ein Fräswerkzeug 11 vorgesehen ist. Das Gehäuse des Motors 8 ist an seinem unteren Teil von einer zylindrischen Manschette 12 umschlossen, an welcher Standbeine 13 angeformt sind, die ihrerseits eine ringförmige Grundplatte 14 tragen. Die Manschette 12 ist mit einem Langloch 15 versehen, welches von einer Klemmschraube 16 durchsetzt ist, wodurch die Manschette 12 und damit auch die Grundplatte 14 in Richtung der Fräserachse 17 stufenlos verschiebbar und in beliebigen Positionen arretierbar sind. Die Oberfräse 6 kann mit Hilfe von Handgriffen 18 gehalten und geführt werden.

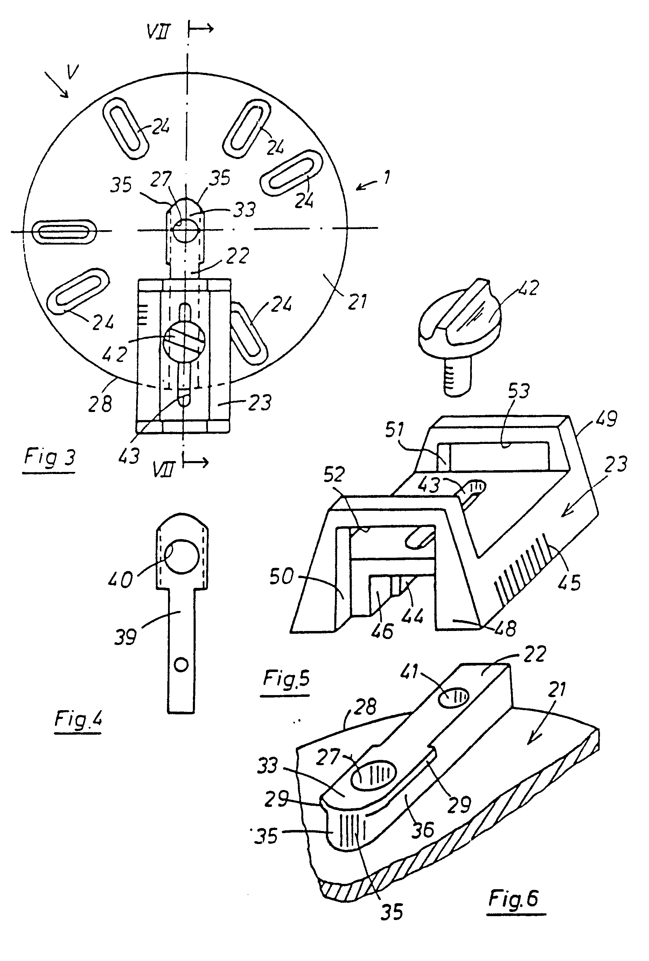

An der Grundplatte 14 der Oberfräse 6 sind Befestigungseinrichtungen 19 in Form von Anschraublöchern für den Oberfräsenführer 1 vorgesehen, vgl. auch Fig. 3. Dieser umfaßt im wesentlichen eine Führungsplatte 21 und einen an deren Unterseite vorstehenden, vom Fräswerkzeug 11 durchsetzten, stegartigen Führungsschuh 22, auf welchem ein Fräshub-Begrenzungsanschlag 23 verschiebbar gelagert ist.

Die Führungsplatte 21 besitzt eine Vielzahl von Durchbrüchen 24 für Befestigungsschrauben 25 zur Verbindung mit der Grundplatte 14 der Oberfräse 6. Die Durchbrüche 24 sind als radiale, stufenförmig abgesetzte Langlöcher ausgebildet, so daß eine Befestigung der Führungsplatte 21 an den verschiedensten Oberfräsentypen möglich ist. Die Führungsplatte 21 weist in ihrem Zentrum eine Durchlaßöffnung 26 für das Fräswerkzeug 11 auf, vgl. Fig. 8.

Der Führungsschuh 22 besitzt ebenfalls eine Durchlaßöffnung 27 für das Fräswerkzeug 11, welche koaxial zur Durchlaßöffnung 26 der Führungsplatte 21 ist. Der Führungsschuh 22 ist radial zu den Durchlaßöffnungen 26, 27 gerichtet und erstreckt sich bis zum Rand 28 der Führungsplatte 21, vgl. Fig. 3 und Fig. 6 bis 8. Der Führungsschuh 22 weist im Bereich der Durchlaßöffnung 27 einen T-förmigen Querschnitt mit seitlichen T-Stegen 29 auf und hat im übrigen einen rechteckigen Querschnitt. Mit Hilfe der T-Stege 29 kann der Führungsschuh 22 die Zinken 30, 31 hintergreifen, welche zwischen den Schlitzen 5 der Zinkenfräslehre 2 ausgebildet sind. Die Zinken 30, 31 sind im übrigen in der Nähe des Eckbereiches der Platte 3, 4 mit Nuten 32 zur Einführung der T-Stege 29 versehen.

Zur Erleichterung der Einführung in einen Schlitz 5 der Zinkenfräslehre 2 weist der Führungsschuh 22 ein Einführende 33 auf, welches eine Länge von etwa dem Ein- bis Zweifachen des Durchmessers der Durchlaßöffnung 27 besitzt und stirnseitig mit Einführschrägen 35 versehen ist. Bei dem gezeigten Ausführungsbeispiel werden die Einführschrägen 35 durch eine bugförmige Abrundung des Einführendes 34 erreicht, so daß sie kantenfrei in die seitlichen Führungsflächen 36 des Führungsschuhs 22 übergehen.

Der Führungsschuh 22 ist mit Hilfe von Senkkopfschrauben 37 an der Führungsplatte 21 auswechselbar festgeschraubt, wobei ein Zentrierbolzen 38 für eine exakte Positionierung sorgt, vgl. Fig. 7 und 8. Auf diese Weise ist der Führungsschuh 22 gegen einen anderen, z. B. breiteren Führungsschuh 39 auswechselbar (vgl. Fig. 4), welchem eine entsprechend größere Zinkenfräslehre zugeordnet ist. In dem gezeigten Ausführungsbeispiel ist die Durchlaßöffnung 26 der Führungsplatte 21 größer als die Durchlaßöffnung 27 des Führungsschuhs 22, um auch eine Anpassung des Oberfräsenführers 1 an den Führungsschuh 39 mit einer erweiterten Durchlaßöffnung 40 zu ermöglichen.

Der Führungsschuh 22 weist nahe des Außenrandes 28 der Führungsplatte 21 eine Gewindebohrung 41 für eine Feststellschraube 42 auf, welche ein Langloch 43 des Begrenzungsanschlags 23 durchsetzt. Der Begrenzungsanschlag 23 ist auf seiner der Führungsplatte 21 zugewandten Seite mit einer Rechtecknut 44 versehen, mit welcher er den rechteckigen Bereich des Führungsschuhs 22 umgreift und an diesem geführt wird. Er trägt an seiner seitlichen Außenfläche eine Skala 45 zur Einstellung der jeweils gewünschten Nutlänge.

Der Begrenzungsanschlag 23 ist bis zur Durchlaßöffnung 27 des Führungsschuhs 22 vorschiebbar, weshalb die Rechtecknut 44 in ihren Endbereichen 46, 47 zwecks Aufnahme der T-Stege 29 verbreitert ist. Der Begrenzungsanschlag 22 ist an seinen beiden Anschlag-Stirnenden 48, 49 jeweils mit einer zur Führungsplatte 21 hin offenen Ausnehmung 50, 51 versehen, deren Bodenfläche einen Axialanschlag 52, 53 zur Justierung des Fräswerkzeugs 11 bildet. Fig. 8 zeigt hier die Justierung durch einen Axialanschlag 52 für relativ große Nuttiefen. Nach Lösen der Feststellschrauben 42 ist der Begrenzungsanschlag 23 um 180° auf dem Führungsschuh 22 umsetzbar, so daß auch ein Werkzeug für geringere Nuttiefen mit Hilfe des Axialanschlags 53 einjustiert werden kann.

Um in jedem Falle eine genaue Zentrierung des Fräswerkzeugs 11 im Hinblick auf die Durchlaßöffnungen 26, 27 sicherzustellen, ist dem Oberfräsenführer 1 ein Zentrierstift 54 zugeordnet, welcher in den Spannkopf 10 der Oberfräse 7 einspannbar ist und dessen Zentrierende 55 spielfrei in die Durchlaßöffnung 27 des Führungsschuhs 22 paßt. Nach der somit erreichten Zentrierung der Führungsplatte 21 können dann die Befestigungsschrauben 25 festgesetzt werden.

## Patentansprüche

1. Oberfräsenführer (1) zur Führung einer mobilen Oberfräse, wobei die Oberfräse (6) eine mit einem zentralen Durchbruch für das Fräswerkzeug (11) versehene Grundplatte (14) aufweist, die in Fräserachsrichtung (17) verstellbar ist und Befestigungseinrichtungen (19) für eine Führungsplatte (21) aufweist, dadurch gekennzeichnet, daß der Oberfräsenführer (1) für einen Einsatz bei einer gitterartigen Zinkenfräslehre (2) ausgebildet ist, wozu die auf die Zinkenfräslehre (2) aufzulegende Führungsplatte (21) an ihrer Unterseite einen vorstehenden, vom Fräswerkzeug (11) durchsetzten, stegartigen Führungsschuh (22) aufweist, welcher radial zur Durchlaßöffnung (27) für das Fräswerkzeug (11) gerichtet ist und in die Gitterschlitze (5) der Zinkenfräslehre (2) einschiebbar ist, daß sich der Führungsschuh (22) bis etwa zum Rand (28) der Führungsplatte (21) erstreckt und daß auf dem Führungsschuh (22) ein arretierbarer Fräshub-Begrenzungsanschlag (23) verschiebbar gelagert ist.

2. Oberfräsenführer nach Anspruch 1, dadurch gekennzeichnet, daß der Führungsschuh (22) zumindest im Bereich der Durchlaßöffnung (27) einen T-förmigen Querschnitt aufweist, dessen T-Stege (29) in untere Ecknuten (32) der Zinken (30, 31) der Zinkenfräslehre (2) einschiebbar sind.

3. Oberfräsenführer nach Anspruch 2, dadurch gekennzeichnet, daß der Führungsschuh (22) nahe des Außenrandes (28) der Führungsplatte (21) eine Gewindebohrung (41) für eine ein Langloch (43) des Begrenzungsanschlages (23) durchsetzende Feststellschraube (42) aufweist.

4. Oberfräsenführer nach einem der Ansprüche 1 bis 3, dadurch gekennzeichnet, daß das dem Anschlag (23) gegenüberliegende, an die Durchlaßöffnung (27) angrenzende Einführende (33) des Führungsschuhs (22) eine Länge von etwa dem Ein- bis Zweifachen des Durchmessers der Durchlaßöffnung (27) aufweist und stirnseitig mit Einführschrägen (35) versehen ist, die in die Führungsflächen (36) des Führungsschuhs (22) gleichmäßig übergehen.

5. Oberfräsenführer nach einem der Ansprüche 2 bis 4, dadurch gekennzeichnet, daß der Begrenzungsanschlag (23) bis zur Durchlaßöffnung (27) vorschiebbar ist und einen Axialanschlag (52) zur Justierung des Fräswerkzeuges (11) aufweist.

6. Oberfräsenführer nach Anspruch 5, dadurch gekennzeichnet, daß der Begrenzungsanschlag (23) im Bereich seines Anschlag-Stirnendes (48) mit einer zur Führungsplatte (21) hin offenen Ausnehmung (50) versehen ist, deren Bodenfläche den Axialanschlag (52) bildet.

7. Oberfräsenführer nach Anspruch 6, dadurch gekennzeichnet, daß der Begrenzungsanschlag (23) an beiden Stirnenden (48, 49) mit unterschiedlich bemessenen Justier-Ausnehmungen (50, 51) versehen ist und um 180° auf dem Führungsschuh (22) umsetzbar ist.

8. Oberfräsenführer nach einem der Ansprüche 1 bis 7, dadurch gekennzeichnet, daß die Führungsplatte (21) mit einer Vielzahl von Durchbrüchen (24) für Befestigungsschrauben (25) versehen ist, welche eine Übergröße aufweisen, z. B. als Langlöcher ausgebildet sind, und daß der Führungsplatte (21) ein in die Oberfräse (6) einspannbarer Zentrierstift (54) zugeordnet ist, dessen Zentrierende (55) spielfrei in die Durchlaßöffnung (27) paßt.

9. Oberfräsenführer nach einem der Ansprüche 1 bis 8, dadurch gekennzeichnet, daß der Führungsplatte (21) mehrere Führungsschuhe (22, 39) unterschiedlicher Größe zugeordnet sind, die auswechselbar an der Führungsplatte (21) festschraubbar sind.

## Claims

1. Router guide (1) for guiding a mobile router, the router (6) having a base plate (14) with a central opening for the router tool (11), the base plate (14) being adjustable along the axis of the router (17) and having fastening devices (19) for a guide plate (21), characterized in that the router guide (1) is designed for use with a gridform dovetailing jig (2) for which the guide plate (21), to be laid on the dovetailing jig (2), has on its underside a protruding, bar-type guide shoe (22), through which the router tool (11) passes, the guide shoe being set radially, to the opening (27) for the router tool (11) and insertable into the grid slots (5) of the dovetailing jig (2), in that the guide shoe (22) extends approximately to the edge (28) of the guide plate (21), and in that a lockable, sliding, travel-limit stop (23) for the router (6) is located on the guide shoe (22).

2. Router guide according to claim 1, characterized in that the guide shoe (22) has, at least in the area of the opening (27) a T-shaped cross-section, whose T-arms (29) can be inserted into lower corner grooves (32) of the teeth (30, 31) of the dovetailing jig (2).

3. Router guide according to claim 2, characterized in that the guide shoe (22) has a threaded hole (41) near the outer edge (28) of the guide plate (21), for a setting screw (42), which passes through an oblong slot (43) in the router travel stop (23).

4. Router guide according to any of claims 1 to 3, characterized in that the lead-in end (33) of the guide shoe (22), which is located opposite the stop (23) and next to the opening (27), has a length of approximately one to two times the diameter of the opening (27), and has on its face lead-in bevels (35), which gradually merge into the guide surfaces (36) of the guide shoe (22).

5. Router guide according to any of claims 2 to 4, characterized in that the router travel stop (23) can be pushed up to the opening (27) and has an axial stop (52) for the adjustment of the router tool (11).

6. Router guide according to claim 5, characterized in that the router travel stop (23) has in the area of its stop face (48) a cut-out (50) which is open towards the guide plate (21), and whose bottom face forms the axial stop (52).

7. Router guide according to claim 6, characterized in that the router travel stop (23) has on both faces (48, 49) adjustment cut-outs (50, 51) of different dimensions, and can be rotated through 180 deg on the guide shoe (22).

8. Router guide according to any claim from 1 to 7, characterized in that the guide plate (21) has many openings (24) for fixing screws (25), these are oversized, for example oblong slots, the guide plate (21) is fitted with a centering pin (54) which can be clamped into the router (6), its centering end (55) fitting without any play into the opening (27).

9. Router guide according to any claim from 1 to 8, characterized in that the guide plate (21) is fitted with several guide shoes (22, 39) of different sizes, which can be interchangeably bolted down onto the guide plate (21).

## Revendications

1. Guide de fraisage à défoncer (1) destiné au guidage d'une fraise à défoncer mobile, la fraise à défoncer (6) présentant une plaque de base (14) pourvue d'un passage central destiné à l'outil de fraisage (11), qui est réglable en direction axiale de fraisage (17) et qui comporte des moyens de fixation (19) destinés à une plaque de guidage (21), caractérisé par le fait que le guide de fraisage à défoncer (1) est conçu pour utilisation avec un gabarit en forme de grille pour le fraisage des queues d'aronde (2), la plaque de guidage (21) à appliquer à cet effet sur le gabarit de fraisage des queues d'aronde (2) présentant sur sa face inférieure un patin de guidage (22) nervuré, faisant saillie et traversé par l'outil de fraisage (11), qui est orienté radialement par rapport à l'orifice de passage (27) destiné à l'outil de fraisage (11) et qui est insérable dans les rainures de grille (5) du gabarit de fraisage de queues d'aronde (2), le patin de guidage (22) s'étend à peu près jusqu'au bord (28) de la plaque de guidage (21) et qu'une butée de limitation de course de fraisage (23) blocable est montée coulissante sur le patin de guidage (22).

2. Guide de fraisage à défoncer selon la revendication 1, caractérisé par le fait que le patin de guidage (22) présente au moins dans la zone de l'orifice de passage (27) une section transversale en forme de T, dont les ailes de T (29) sont insérables dans des gorges de coin (32) des dents (30, 31) du gabarit de fraisage de queues d'aronde (2).

3. Guide de fraisage à défoncer selon la revendication 2, caractérisé par le fait que le patin de guidage (22) présente, à proximité du bord extérieur (28) de la plaque de guidage (21), un alésage taraudé (41) destiné à une vis de fixation (42) traversant un trou oblong (43) de la butée de délimitation (23).

4. Guide de fraisage à défoncer selon l'une des revendications 1 à 3, caractérisé par le fait que l'extrémité d'introduction (33) du patin de guidage (22) qui est éloignée de la butée (23) et contiguë à l'orifice de passage (27) présente une longueur faisant à peu près une à deux fois le diamètre de l'orifice de passage (27) et est pourvue frontalement de chanfreins d'introduction (35) se transformant au fur et à mesure en surfaces de guidage (36) du patin de guidage (22).

5. Guide de fraisage à défoncer selon l'une des revendications 2 à 4, caractérisé par le fait que la butée de limitation (23) est suceptible d'avancer jusqu'à l'orifice de passage (27) et présente une butée axiale (52) en vue de l'ajustage de l'outil de fraisage (11).

6. Guide de fraisage à défoncer selon la revendication 5, caractérisé par le fait que la butée de limitation (23) est pourvue, dans la zone de son extrémité frontale de butée (48), d'un évidement (50) ouvert vers la plaque de guidage (21), dont la surface de fond constitue la butée axiale (52).

7. Guide de fraisage à défoncer selon la revendication 6, caractérisé par le fait que la butée de limitation (23) est pourvue aux deux extrémités frontales (48, 49) d'évidements d'ajustement (50, 51) de dimensions différentes et retournables de 180° sur le patin de guidage (22).

8. Guide de fraisage à défoncer selon l'une des revendications 1 à 7, caractérisé par le fait que la plaque de guidage (21) est pourvue de multiples passages (24) destinés à des vis de fixation (25), présentant une surlongueur, en étant par exemple réalisés sous la forme de trous oblongs, et qu'une goupille de centrage (54), serrable dans la fraise à défoncer (6), dont l'extrémité de centrage (55) s'ajuste sans jeu dans l'orifice de passage (27), est associée à la plaque de guidage (21).

9. Guide de fraisage à défoncer selon l'une des revendications 1 à 8, caractérisé par le fait que plusieurs patins de guidage (22, 39) de longueurs différentes, blocables par vissage de manière interchangeable sur la plaque de guidage (21), sont associés à la plaque de guidage (21).

EP 0 223 030 B1

Fig.1

Fig.2

1

VII

V

35 27 35

33

24

24

24

24

1

21

22

42

28

24

23

43

VII

*Fig 3*

42

53

51

49

52

43

23

50

44

45

46

48

40

39

*Fig.5*

*Fig.4*

41

22

28

21

33

27

29

29

35

36

35

*Fig.6*

_Fig.7_

_Fig.8_

_Fig.9_